# EUROPEAN PATENT APPLICATION

(11) **EP 0 638 827 A1**
(43) Date of publication of application: **15.02.1995**
(21) Application number: 94112497.6
(22) Date of filing: 10.08.1994
(51) Int. Cl.: G02B 6/38

(54) **Method of reinforcing optical fiber and its structure**

(30) Priority: 10.08.1993 JP 198361/93
(71) Applicant: SUMITOMO ELECTRIC INDUSTRIES, LTD., Osaka-shi, Osaka 541 (JP)
(72) Inventor: Seike, Takeo, c/o Yokohama Works of Sumitomo, Yokohama-shi, Kanagawa 244 (JP); Tsuchihashi, Ryuji, c/o Yokohama Works of Sumitomo, Yokohama-shi, Kanagawa 244 (JP); Tokumaru, Yuzo, c/o Yokohama Works of Sumitomo, Yokohama-shi, Kanagawa 244 (JP); Endo, Satoshi, c/o Yokohama Works of Sumitomo, Yokohama-shi, Kanagawa 244 (JP); Morrison, Thomas A., Yokohama Works of Sumitomo, Yokohama-shi, Kanagawa 244 (JP)
(74) Representative: Füchsle, Klaus, Dipl.-Ing.

(57) **Abstract**

The invention relates to a structure for reinforcing an optical fiber (1), especially a bare fiber portion (1a) of the optical fiber (1) comprising a semi-cylindrical reinforcing member (10). The optical fiber (1) is placed in a groove (12) of the reinforcing member (10) so that the bare fiber portion (1a) of the optical fiber (1) is placed in a central portion of the groove (12) in a longitudinal direction. Further, the reinforcing structure comprises a heat-shrinkable tubing (14) adhered and fixed on a periphery of the reinforcing member (10) so as to cover the central portion of the groove (12). A part of the optical fiber (1) which is at the outside of the heat-shrinkable tubing (14) is fixed at the reinforcing member (10) by the adhesive (16). Further, the adhesive (16) seals ends of a hollow portion (18) defined by the reinforcing member (10) and the heat-shrinkable tubing (14). Therefore, the bare fiber portion (1a) of the optical fiber (1) in the hermetically sealed hollow portion (18) is protected from the external factors such as moisture, shocks or others.

## Description

### BACKGROUND OF THE INVENTION

### Field of the Invention

The present invention relates to a method of reinforcing an optical fiber, especially a bare fiber portion of the optical fiber, and an optical fiber reinforcing structure.

### Related Background Art

In a general method of coupling optical fibers, first, the coating at the coupling ends of two optical fibers are removed to expose bare fibers. Next, the end faces of the bare fibers are butted against each other, and then heated by means of laser light, electric discharge, etc. to fuse the bare fiber ends together.

A fusion drawing method of coupling optical fibers is well known. In the fusion drawing method, first a part of the coating of a plurality of optical fibers is removed to expose the bare optical fibers. Next, the exposed optical fibers are bundled through heating fusion in which they are twisted or arranged in parallel. Subsequently, the bundled portion is heated and drawn. Drawing is terminated when a characteristic such as a coupling ratio reaches a predetermined value, thereby forming a coupling portion.

In recent years, an optical waveguide which is flat and formed on a waveguide substrate has made a great advance, and a method of coupling an optical waveguide with optical fibers has been studied and improved. In the case of coupling the optical waveguide and the optical fiber, a part of the coating of the optical fiber is also removed to expose a bare fiber.

As described above, in the fused and coupled optical fibers, or an optical fiber coupler having a fused and drawn portion, since the fused and coupled portion or the fused and drawn portion is a bare fiber, this portion is needed to be protected from external factors such as a shock, vibration, or others.

A conventional reinforcing structure for a bare fiber portion of an optical fiber coupler is disclosed in Japanese Patent Laid-Open No. SHO 63-271208 (271208/1988). In this Japanese Patent Laid-Open No. SHO 63-271208, a method in which only a drawn portion (small-diameter molten portion) of the optical fiber coupler is suspended and non-drawn portions (large-diameter molten portions) on both sides of the small-diameter molten portion are fixed to a case or a jig is disclosed.

Further, a multi-fiber coupler reinforcing structure is disclosed in Japanese Patent Laid-Open No. SHO 63-254406 (254406/1988). In this reinforcing structure, a pair of comb teeth-shaped fixing portions having a plurality of grooves are arranged on a substrate. The fixing portions are faced each other in a longitudinal direction of the substrate. Further, a plurality of optical fiber couplers are arranged in a direction perpendicular to a direction in which two optical fibers (bare fibers) are arranged.

However, the conventional reinforcing methods do not give sufficient reinforcement. The bare fiber portion may be damaged because of the variation of temperature, the mechanical vibration for long period of time, a shock such as a drop, or other reasons.

Additionally, in typical conventional reinforcing methods, the entire bare optical fiber portion is covered with adhesive, which may impair the optical characteristics of the optical fibers.

Further, in the conventional reinforcing methods, the optical fibers are not hermetically sealed within the reinforcing structure. Moisture or other external environmental elements can enter the reinforcing structure. Thus the deterioration of strength, and variations in transmission loss occur at high temperatures or in water.

### SUMMARY OF THE INVENTION

It is an object of the present invention to provide a method of reinforcing an optical fiber and a reinforcing structure which can prevent the damage of the optical fiber or the change in its characteristics due to the external factors such as a variation of temperature, a mechanical vibration, or others.

In order to achieve the object, the present invention provides a method of reinforcing an optical fiber comprising a step of disposing a heat-shrinkable tubing at a periphery of a reinforcing member so as to cover one portion of a groove of the reinforcing member, the groove extending along a predetermined axis of the reinforcing member, a step of heating the heat-shrinkable tubing to adhere to the reinforcing member, a step of disposing an optical fiber in the groove so that the bare fiber portion of the optical fiber is placed in the one portion of the groove, a step of fixing a part of the optical fiber located in a remaining portion of the groove by an adhesive, and a step of sealing ends of a hollow portion defined by the reinforcing member and the heat-shrinkable tubing by the adhesive.

According to this method, the heat-shrinkable tubing which is handled easily is used, so that the optical fiber reinforcing structure can be constructed easily. In a reinforcing structure constructed by this method, the bare fiber portion of the optical fiber is reinforced by the reinforcing member, the adhesive, and the heat-shrinkable-tubing. In particular, the very fragile bare fiber portion is placed in the hermetically sealed space surrounded by the reinforcing member, the adhesive, and the heat-shrinkable tubing, so that the water resistance, the vibration resistance, and the shock resistance are sharply improved. Further, since the adhesive is not applied to the bare fiber portion, the degradation of the transmission property of the optical fiber is prevented.

Further, the present invention provides a method of reinforcing an optical fiber comprising a step of disposing a cover member on one portion of a reinforcing member and defining a hollow portion extending along a predetermined axis between the cover member and the reinforcing member, a step of disposing an optical fiber on the reinforcing member along the axis so that a bare fiber portion of the optical fiber is disposded within the hollow portion defined by the reinforcing member and the cover member, a step of fixing a part of the optical fiber located in a remaining portion of the reinforcing member by an adhesive, a step of disposing a heat-shrinkable tubing so as to surround the reinforcing member, the cover member and the adhesive entirely, and a step of heating the heat-shrinkable tubing to adhere to the reinforcing member, the cover member and the adhesive.

In a reinforcing structure constructed by this method, the whole structure is covered by the heat-shrinkable tubing, so that the reinforcing characteristic is improved, and the sealing of the hollow portion in the reinforcing structure is improved.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWING

Fig. 1 is a perspective view showing an optical fiber reinforcing structure of the first embodiment according to the present invention.

Fig. 2 is a longitudinal sectional view of an optical fiber reinforcing structure shown in Fig. 1.

Fig. 3 is a longitudinal sectional view showing a modified example of an optical fiber reinforcing structure shown in Fig. 1.

Fig. 4 is a perspective view showing an optical fiber reinforcing structure of the second embodiment according to the present invention.

Fig. 5 is a longitudinal sectional view of an optical fiber reinforcing structure shown in Fig. 4.

Fig. 6 is a perspective view showing an optical fiber reinforcing structure of the third embodiment according to the present invention.

Fig. 7 is a longitudinal sectional view of a modified example of an optical fiber reinforcing structure shown in Fig. 6.

Fig. 8 is a perspective view showing a modified example of an optical fiber reinforcing structure shown in Fig. 7.

Fig. 9 is a longitudinal sectional view of an optical fiber reinforcing structure shown in Fig. 8.

Fig. 10 is an exploded perspective view showing an optical fiber reinforcing structure of the fourth embodiment according to the present invention.

### DETAILED DESCRIPTION OF THE PREFERRED EMBODIMENTS

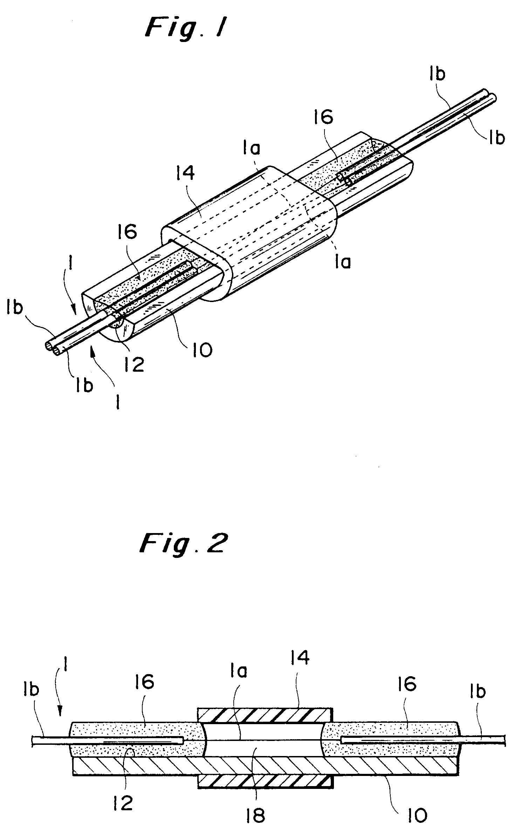

Fig. 1 and Fig. 2 show an optical fiber reinforcing structure of the first embodiment, which is constructed according to the present invention. The reference numeral 10 denotes a reinforcing member which is long slender substantially semi-cylindrical, and the reinforcing member 10 has a groove 12 extending along a longitudinal direction. It is preferable that the reinforcing member 10 is comparatively rigid and made of an opaque material. The cross section of the groove 12 in a direction perpendicular to the longitudinal direction is semicircular. Note that the shape of the reinforcing member 10 is not limited to the semi-cylinder but for example, may be a rectangular solid, and a groove having a square cross-section is formed therein.

Optical fibers 1 to be reinforced are placed in the groove 12 of the reinforcing member 10, and bare fiber portions 1a resulting from removing the coatings from the optical fibers 1 to expose are placed in the central portion of the groove 12 in a longitudinal direction. In this embodiment, an optical fiber coupler which is made from two optical fibers is placed in the central portion of the groove 12. The optical fiber coupler is formed by the above-said general fusion drawing method. A coupling portion is the bare fiber portions 1a from which the coatings of the optical fibers 1 are removed. Further, a coupling portion in which a bare fiber end of one optical fiber and a bare fiber end of another optical fiber are butted against each other and spliced together can be placed in the groove 12 of the reinforcing member 10, which is not shown in drawings. Furthermore, a bare fiber portion of an optical fiber which is coupled with an optical waveguide formed on a waveguide substrate, together with the waveguide substrate, can be placed in the groove 12, which is not shown in the drawings.

A heat-shrinkable tubing 14 is put on the central portion of the reinforcing member 10 in the longitudinal direction beforehand. The heat-shrinkable tubing 14 is shrunk upon the application of heat, and in result, it is adhered and fixed to the reinforcing member 10. A material of the heat-shrinkable tubing 14 preferably has a durability and a water resistance which are stable under severe outdoor environment, e.g., a material which is opaque and shrunk at low temperature, around 200 °C. For the heat-shrinkable tubing 14, a heat-shrinkable tubing made of soft viscous polyethylene, e.g., SUMITUBE (sold by SUMITOMO ELECTRIC INDUSTRIES, LTD.) is preferable.

After the optical fibers 1 are placed in the groove 12 of the reinforcing member 10 on which the heat-shrinkable tubing 14 is fixed in such a manner, an adhesive 16 is filled in both sides of the groove 12, whereby the optical fibers 1 are fixed at the reinforcing member 10 by the adhesive 16. In this case, the adhesive 16 is preferably a thermosetting adhesive or an adhesive which cures upon an ultra violet ray. As indicated clearly in Fig. 2, the adhesive 16 seals each end of a hollow portion 18 defined by the heat-shrinkable tubing 14 and the reinforcing member 10. The adhesive 16 does not flow into the hollow portion 18 because of its surface tension. Accordingly, the inside of the hollow portion 18 is a hermetically sealed space. Next, after the adhesive 16 is cured, the central portions of the bare fiber portions 1a are supported by the adhesive 16 not in contact with an inner surface of the groove 12 or the heat-shrinkable tubing 14. Note that in a case of positioning the optical fibers 1 in the groove 12 of the reinforcing member 10, the adhesive 16 is filled in the groove 12 while the reinforcing member 10 and the optical fibers 1 are supported by a proper supporting means (not shown).

As described above, since the hollow portion 18 surrounded by the reinforcing member 10, the heat-shrinkable tube 14 and the adhesive 16 are shut out from the external environment, the bare fiber portions 1a of the optical fibers 1 placed in the hollow portion 18 are protected from the moisture and the variation of temperature. Further, since the bare fiber portions 1a of the optical fibers 1 are surrounded by the reinforcing member 10 and the heat-shrinkable tubing 14 with a certain space therebetween, the bare fiber portions 1a are protected from the external factors such as vibration, a shock, or other reasons.

The structure shown in Fig. 1 and Fig. 2 is preferably formed by placing the optical fibers 1 in the groove 12 of the reinforcing member 10 after the heat-shrinkable tubing 14 is fixed on the reinforcing member 10, filling the adhesive 16 into the groove 12 and curing the adhesive 12. However, the reinforcing structure shown in Fig. 1 and Fig. 2 can also be formed by placing the optical fibers 1 in the groove 12 of the reinforcing member 10, filling the adhesive 16 into both ends of the groove 12, and fixing the heat-shrinkable tubing 14 on the reinforcing member 10. In either method, a part of the groove 12 where the adhesive 16 will be filled is exposed, so that a work of filling the adhesive can be performed easily. Additionally, since the handling of the heat-shrinkable tubing 14 is easy, the work efficiency of the reinforcing structure manufacture is excellent.

Fig. 1 and Fig. 2 illustrate a state that the adhesive 16 also surrounds a part of the bare fiber portion 1a, but the heat-shrinkable tubing 14 may be placed so as to cover a part of the coating portions 1b of the optical fibers 1, and the adhesive 16 is arranged so as not to exceed the coating portions 1b.

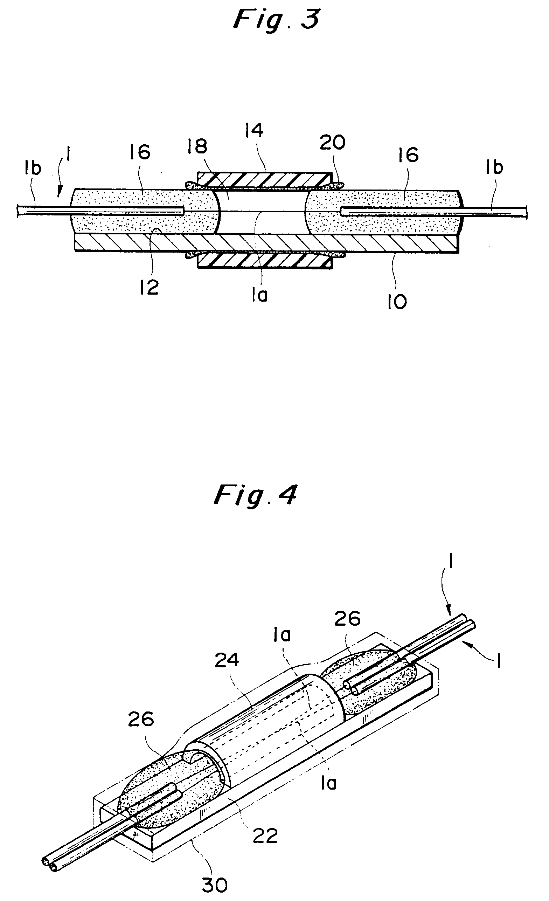

Fig. 3 shows a modified example of the optical fiber reinforcing structure shown in Fig. 1. The optical fiber reinforcing structure shown in Fig. 3 has substantially the same structure as the reinforcing structure shown in Fig. 1, but the adhesive 20 lies between the heat-shrinkable tubing 14 and the reinforcing member to integrate the heat-shrinkable tubing 14 and the reinforcing member, which is different from the reinforcing structure shown in Fig. 1. In the structure shown in Fig. 3, sealing of the hollow portion 18 in which the bare fiber portions 1a of the optical fibers 1 are contained is further improved. For the heat-shrinkable tubing 14 in this case, it is preferable that the heat-shrinkable tubing in which a hot-melt adhesive 20 is applied to the inner surface, e.g., SUMITUBE W (sold by SUMITOMO ELECTRIC INDUSTRIES, LTD.) is used. With the use of such a heat-shrinkable tubing 14 with adhesive, a process of injecting the hot-melt adhesive 20 between the reinforcing member 10 and the heat-shrinkable tubing 14 is not needed.

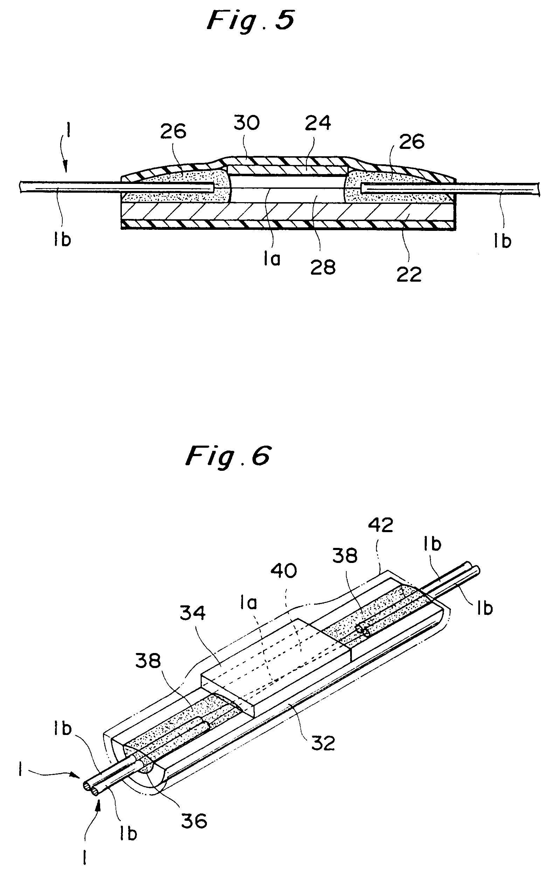

Fig. 4 and Fig. 5 show an optical fiber reinforcing structure of the second embodiment according to the present invention. In the second embodiment, first, a substructure shown as solid lines in Fig. 4 is formed. In the second embodiment, the reinforcing member 22 is a square flat plate. In this embodiment, an optical fiber coupler made from two optical fibers 1, that is, the coupled bare fiber portions 1a is placed on an upper surface of the reinforcing member 22 along an axis in the longitudinal direction of the reinforcing member 22. Further, a substantially semi-cylindrical cover 24 is placed on the upper surface of the reinforcing member 22 so as to cover at least the central portion of the bare fiber portions 1a of the optical fibers 1.

An adhesive 26 is applied to the upper surface of the reinforcing member 22 so as to bundle a part of the bare fiber portions 1a exposed from both ends of the cover 24 and a part of the coating portions 1b of the optical fibers 1. It is preferable that when the adhesive 26 is cured, the optical fibers 1 are fixed to the reinforcing member 22 by the adhesive 26 so that at least the bare fiber portions 1a of the optical fibers 1 are separated from the upper surface of the reinforcing member 22 and the inner surface of the cover 24 by a certain space. The adhesive 26 blocks each end of the hollow portion 28 defined by the cover 24 and the reinforcing member 22 to shut out the bare fiber portions 1a of the optical fibers 1 placed in the hollow portion 28 from the external environmental.

After the substructure shown as the solid lines in Fig. 4 is formed, a heat-shrinkable tubing 30 is placed so as to cover the entire substructure shown as an alternate long and two short dashes line, and shrunk by heating to adhere and fix to the substructure (see Fig. 5).

In the reinforcing structure shown in Fig. 4 and Fig. 5, the heat-shrinkable tubing 30 surrounds the whole portion, so that the optical fibers 1 supported by the reinforcing member 22 are protected more strongly, and the bare fiber portions 1a of the optical fibers 1 are protected against a strong shock caused by mechanical vibration, drop or others. Further, the presence of the heat-shrinkable tubing 30 improves the sealing of the hollow portion 28. Accordingly, a process of adhering the cover 24 to the reinforcing member 22 using the adhesive 26 can be omitted. The hollow portion 28 can be shut out from the outside by the heat-shrinkable tubing 30 even if the ends of the hollow portion 28 are not sealed by the adhesive 26.

Fig. 6 shows a reinforcing structure of the third embodiment according to the present invention. In the reinforcing structure shown in Fig. 6, a reinforcing member 32 is substantially the same as the reinforcing member 10 of the first embodiment and is semi-cylindrical. Further, a cover 34 has a shape of a flat plate. An optical fiber coupler, that is, the coupled bare fiber portions 1a of the optical fibers 1 is placed in a central portion of a groove 36 of the reinforcing member 32, and the cover 34 is fixed to the reinforcing member 32 so as to cover the optical fiber portion 1a. An adhesive 38 is filled in both ends of the groove 36 of the reinforcing member 32 to fix the optical fibers 1 to the reinforcing member 32 and to seal a hollow portion 40 defined by the reinforcing member 32 and the cover 34. After a substructure is formed shown as solid lines in Fig. 6, a heat-shrinkable tubing 42 is installed so as to cover the entire substructure.

Thus formed reinforcing structure is entirely covered by the heat-shrinkable tube 42 as same as the structure shown in Fig. 4 and Fig. 5, so that the bare fiber portions 1a of the optical fibers 1 can be protected effectively from the external factors such as a shock or other reasons. The heat-shrinkable tubing 42 improves the sealing of the hollow portion 40 in which the bare fiber portions 1a are placed, so that the characteristics such as a water resistance, a heat resistance or others are good. Further, since similar to the structure shown in Fig. 4 and Fig. 5, the cover 34 is not needed to be adhered to the reinforcing member 32, the reinforcing structure shown in Fig. 6 can easily be formed.

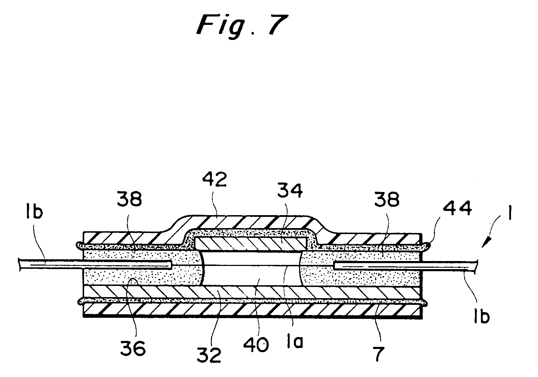

Fig. 7 shows a modified example of the reinforcing structure shown in Fig. 6. In the reinforcing structure shown in Fig. 7, a hot-melt adhesive 44 lies between the heat-shrinkable tubing 42 and the reinforcing member 32 to integrate both. Accordingly, sealing of the hollow portion 40 in which the bare fiber portions 1a of the optical fibers 1 are contained is further improved.

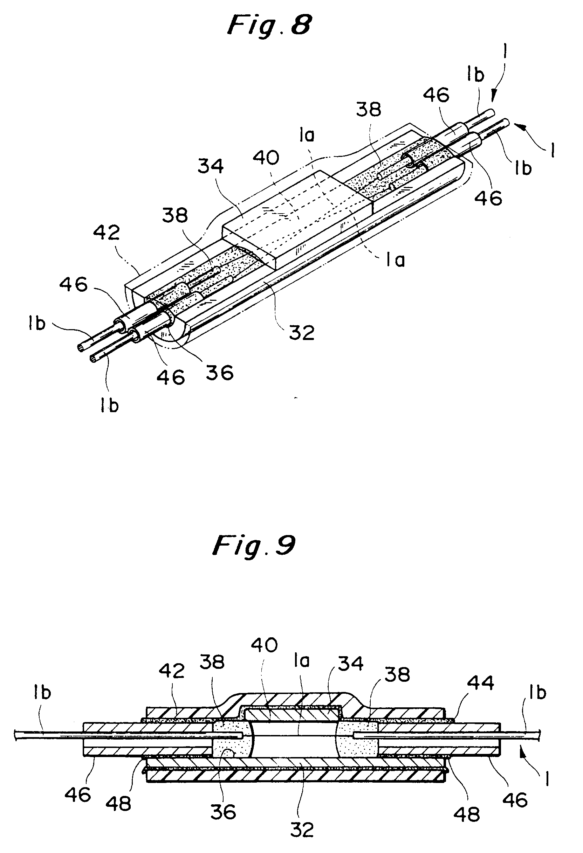

A reinforcing structure shown in Fig. 8 and Fig. 9 is that the reinforcing structure shown in Fig. 7 is further modified. The reinforcing structure is substantially the same as the reinforcing structure in Fig. 8, but a reflective protective tube 46 is put on a part of the optical fiber which is located in the vicinity of each end of the reinforcing member 32, and the protective tube 46 is integrated with the reinforcing member 32 and the heat-shrinkable tubing 42 by the adhesive 38 and the hot-melt adhesive 44 and 48, which are different from the reinforcing structure shown in Fig. 7.

The reinforcing structure shown in Fig. 8 and Fig. 9 brings the following effects. That is, the protective tube 46 is integrated with the reinforcing member 32 and the heat-shrinkable tubing 42 by the adhesive 38 and the hot-melt adhesive 44 and 48, so that even though the very large bending stress or the horizontal stress is applied to the optical fibers 1 in the vicinity of the ends of the reinforcing member 32, the optical fibers 1 together with the protective tube 46 are gently curved and the occurrence of the damage or others can be prevented.

Such a protective tube 46 can be applied to the reinforcing structure shown in Fig. 1-Fig. 5, which is apparent to those skilled in the art.

In the above-described manufacturing method of the reinforcing structure shown in Fig. 4-Fig. 9, after the optical fibers 1 are placed, the cover 24 or 34 is fixed at the reinforcing member 22 or 32. However, the optical fibers 1 may be placed at a certain position after the cover 24 or 34 is fixed at the reinforcing member 22 or 32. Alternatively, a member in which the reinforcing member and the cover are integrated can be used.

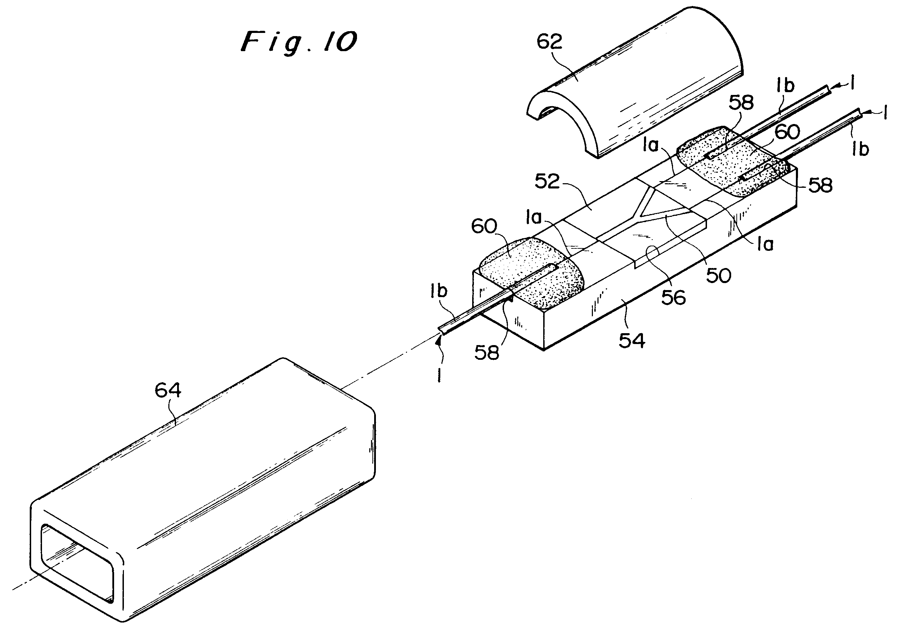

Fig. 10 shows a reinforcing structure of the fourth embodiment according to the present invention for reinforcing the bare fiber portions 1a of the optical fibers 1 which are coupled to an optical waveguide 50 formed on a waveguide substrate 52. A 1x2 branch type optical waveguide 50 is formed on an upper surface of the waveguide substrate 52 of the present embodiment. The waveguide substrate 52 is put in a dent 56 formed at the central portion of a flat reinforcing member 54 in a longitudinal direction, and fixed and adhered so that the remaining upper surface of the reinforcing member 54 and the upper surface of the waveguide substrate 52 are in the same plane. Each end face of the optical waveguide 50 of the waveguide substrate 52 and the end face of the bare fiber portion 1a of the optical fiber 1 placed along the longitudinal direction on the reinforcing member 54 are butted against each other and spliced together. Each optical fiber 1 is placed and positioned in a guide groove 58 on the upper surface of the reinforcing member 54 extending from the end of the reinforcing member 54 to the respective end face of the optical waveguide 50. A part of the coating portions 1b of the optical fibers 1 and a part of the bare fiber portions 1a are fixed and adhered on the upper surface of the reinforcing member 54 by the adhesive 60.

A substantially semi-cylindrical cover 62 is installed on the central portion of the upper surface of the reinforcing member 54 so as to cover at least the coupling portions between the optical waveguide 50 and the bare fiber portions 1a.

Thus constructed substructure is entirely covered by the heat-shrinkable tubing 64. The heat-shrinkable tubing 64 is shrunk by heating to adhere to the substructure. The resulting reinforcing structure can reinforce the optical fibers 1 and protect the bare fiber portions 1a of the optical fibers 1 and the coupling portions between the bare fiber portions 1a and the optical waveguide 50 from the moisture, the variation of temperature, or others since the hollow portion defined by the reinforcing member 54 and the cover 62 is shut out from the outside owing to the presence of the heat-shrinkable tubing 64.

Note that both ends of the hollow portion between the reinforcing member 54 and the cover 62 can be blocked by the adhesive, which is not shown in Fig. 10. Further, a protective tube shown in Fig. 8 and Fig. 9 can be put on the optical fiber.

From the invention thus described, it will be obvious that the invention may be varied in many ways. Such variations are not to be regarded as a departure from the spirit and scope of the invention, and all such modifications as would be obvious to one skilled in the art are intended to be included within the scope of the following claims.

The basic Japanese Application No. 198361/1993 filed on August 10, 1993 is hereby incorporated by reference.

## Claims

1. A method of reinforcing an optical fiber, comprising the steps of:
disposing a heat-shrinkable tubing at a periphery of a reinforcing member so as to cover one portion of a groove of said reinforcing member, said groove extending along a predetermined axis of said reinforcing member;
heating said heat-shrinkable tubing to adhere to said reinforcing member;
disposing an optical fiber in said groove so that the bare fiber portion of said optical fiber is placed in said one portion of said groove, said bare fiber portion being an exposed portion by removing a part of a coating of said optical fiber;
fixing a part of said optical fiber located in a remaining portion of said groove by an adhesive; and
sealing ends of a hollow portion defined by said reinforcing member and said heat-shrinkable tubing by said adhesive.

2. A method according to Claim 1, wherein said reinforcing member is substantially semi-cylindrical.

3. A method according to Claim 1, wherein said heat-shrinkable tubing is water resistant.

4. A method according to Claim 1, further comprising a step of applying a hot-melt adhesive between said heat-shrinkable tubing and said reinforcing member.

5. A method according to Claim 1, wherein said optical fiber is fixed at said reinforcing member so that said bare fiber portion of said optical fiber is placed at a certain distance from said reinforcing member and said heat-shrinkable tubing.

6. A method according to Claim 1, wherein in a case of an end face of a bare fiber portion formed at an end of said optical fiber being coupled to an optical waveguide formed on a waveguide substrate, said bare fiber portion and said optical waveguide are disposed in said one portion of said groove.

7. An optical fiber reinforcing structure comprising:
an optical fiber having a bare fiber portion exposed by removing a part of a coating;
a reinforcing member having a groove extending along a predetermined axis, said optical fiber being disposed in said groove so that said bare portion of said optical fiber is disposed in one portion of said groove:
a heat-shrinkable tubing adhered and fixed on a periphery of said reinforcing member so as to cover said one portion of said groove; and
an adhesive for fixing a part of said optical fiber located in a remaining portion of said groove at said reinforcing member, sealing ends of a hollow portion defined by said reinforcing member and said heat-shrinkable tubing.

8. An optical fiber reinforcing structure according to Claim 7, wherein said reinforcing member is substantially semi-cylindrical.

9. An optical fiber reinforcing structure according to Claim 7, further comprising a hot-melt adhesive placed between said heat-shrinkable tube and said reinforcing member.

10. An optical fiber reinforcing structure according to Claim 7, wherein said optical fiber is fixed at said reinforcing member so that said bare fiber portion of said optical fiber is placed at a certain distance from said reinforcing member and said heat-shrinkable tubing.

11. An optical fiber reinforcing structure according to Claim 7, further comprising a reflective protective tube for surrounding a part of said optical fiber, fixed at said reinforcing member by said adhesive.

12. An optical fiber reinforcing structure according to Claim 7, wherein in a case of an end face of a bare fiber portion formed at an end of said optical fiber being coupled to an optical waveguide formed on a waveguide substrate, said bare fiber portion and said optical waveguide are disposed in said one portion of said groove.

13. A method of reinforcing an optical fiber, comprising the steps of:
disposing a cover member on one portion of a reinforcing member and defining a hollow portion extending along a predetermined axis between said cover member and said reinforcing member;
disposing an optical fiber on said reinforcing member along said axis so that a bare fiber portion of said optical fiber is disposed within said hollow portion defined by said reinforcing member and said cover member, said bare fiber portion being an exposed part by removing a part of a coating of said optical fiber;
fixing a part of said optical fiber located in a remaining portion of said reinforcing member by an adhesive;
disposing a heat-shrinkable tubing so as to surround said reinforcing member, said cover member and said adhesive entirely; and
heating said heat-shrinkable tubing to adhere to said reinforcing member, said cover member and said adhesive.

14. A method according to Claim 13, wherein said reinforcing member has a shape of a flat plate; and said cover member is substantially semi-cylindrical.

15. A method according to Claim 13, wherein said reinforcing member has a groove extending along said axis; and said optical fiber is disposed in said groove.

16. A method according to Claim 15, wherein said reinforcing member is substantially semi-cylindrical; and said cover member has a shape of a flat plate.

17. A method according to Claim 13, wherein said heat-shrinkable tubing is water resistant.

18. A method according to Claim 13, further comprising a step of sealing ends of said hollow portion defined by said reinforcing member and said cover member by said adhesive.

19. A method according to Claim 13, wherein said step of disposing said cover member on said one portion of said reinforcing member comprises a step of adhering and fixing said cover member and said reinforcing member.

20. A method according to Claim 13, further comprising a step of applying a hot-melt adhesive between each of an inner space of said heat-shrinkable tubing, said reinforcing member, said cover member, said part of said optical fiber, and an external surface of said adhesive.

21. A method according to Claim 4 or 20, wherein a hot-melt adhesive is applied to an inner surface of said heat-shrinkable tubing.

22. A method according to Claim 13, wherein said optical fiber is fixed at said reinforcing member so that said bare fiber portion of said optical fiber is placed at a certain distance from said reinforcing member and said cover member.

23. A method according to Claim 1 or 13, wherein said step of fixing said optical fiber to said reinforcing member by said adhesive comprises a step of putting a reflective protective tube on a part of said optical fiber and fixing said protective tube to said reinforcing member by said adhesive.

24. A method according to Claim 1 or 13, wherein said bare fiber portion of said optical fiber is an optical fiber coupler.

25. A method according to Claim 1 or 13, wherein said bare fiber portion of said optical fiber is a coupling portion between one pair of optical fibers.

26. A method according to Claim 13, wherein in a case of an end face of a bare fiber portion formed at an end of said optical fiber being coupled to an optical waveguide formed on a waveguide substrate, said bare fiber portion and said optical waveguide are disposed on said one portion of said reinforcing member.

27. An optical fiber reinforcing structure comprising:
an optical fiber having a bare fiber portion exposed by removing a part of a coating;
a reinforcing member, said optical fiber being disposed at said reinforcing member along a predetermined axis;
a cover member for defining a hollow portion extending along said axis by said reinforcing member, disposed on a part of said reinforcing member, said bare fiber portion of said optical fiber being disposed in said hollow portion; and
an adhesive for fixing a part of said optical fiber located in a remaining portion of said reinforcing member; and
a heat-shrinkable tubing adhered and fixed so as to surround said reinforcing member, said cover member and said adhesive entirely.

28. An optical fiber reinforcing structure according to Claim 27, wherein said reinforcing member has a shape of a flat plate; and said cover member is substantially semi-cylindrical.

29. An optical fiber reinforcing structure according to Claim 27, wherein said reinforcing member has a groove extending along said axis; and said optical fiber is disposed in said groove.

30. An optical fiber reinforcing structure according to Claim 29, wherein said reinforcing member is substantially semi-cylindrical; and said cover member has a shape of a flat plate.

31. An optical fiber reinforcing structure according to Claim 7 or 27, wherein said heat-shrinkable tubing is water resistant.

32. An optical fiber reinforcing structure according to Claim 27, said adhesive seals ends of said hollow portion defined by said reinforcing member and said cover member by said adhesive.

33. An optical fiber reinforcing structure according to Claim 27, wherein said cover member is adhered to said reinforcing member.

34. An optical fiber reinforcing structure according to Claim 27, wherein said cover member and said reinforcing member are integrally formed.

35. An optical fiber reinforcing structure according to Claim 27, further comprising a hot-melt adhesive placed between each of an inner surface of said heat-shrinkable tubing, said reinforcing member, said cover member and an external surface of said adhesive.

36. An optical fiber reinforcing structure according to Claim 9 or 35, wherein said hot-melt adhesive is applied to an inner surface of said heat-shrinkable tubing.

37. An optical fiber reinforcing structure according to Claim 27, wherein said optical fiber is fixed at said reinforcing member so that said bare fiber portion of said optical fiber is placed at a certain distance from said reinforcing member and said cover member.

38. An optical fiber reinforcing structure according to Claim 27, further comprising a reflective protective tube for surrounding a part of said optical fiber, fixed at said reinforcing member together with said optical fiber by said adhesive.

39. An optical fiber reinforcing structure according to Claim 7 or 27, wherein said bare fiber portion of said optical fiber is an optical fiber coupler.

40. An optical fiber reinforcing structure according to Claim 7 or 27, wherein said bare fiber portion of said optical fiber is a coupling portion between one pair of optical fibers.

41. An optical fiber reinforcing structure according to Claim 27,wherein in a case of an end face of a bare fiber portion formed at an end of said optical fiber being coupled to an optical waveguide formed on a waveguide substrate, said bare fiber portion and said optical waveguide are disposed in said hollow portion.
